# EUROPEAN PATENT APPLICATION

(11) **EP 1 467 371 A2**
(43) Date of publication of application: **13.10.2004**
(21) Application number: 04007713.3
(22) Date of filing: 30.03.2004
(51) Int. Cl.: G11B 27/10

(54) **Variable search method for a recording medium containing video data and a reproducting apparatus using the same**

(30) Priority: 08.04.2003 KR 2003021994
(71) Applicant: LG Electronics Inc., Seoul (KR)
(72) Inventor: Kim, Byoung-Tae, Gyeongsangbuk-Do (KR)
(74) Representative: VOSSIUS & PARTNER

(57) **Abstract**

A variable search method for a recording medium containing video data and a reproducting apparatus using the same are provided. The method includes detecting and storing control information for each chapter of a title when the recording medium is inserted into a reproduction apparatus, performing a variable search mode including viewable speed reproduction on a first portion of the data content of the chapter, and performing a different speed reproduction on the remaining data content of the chapter on the basis of the stored data information. In this way, the contents of each chapter of the recording medium can be rapidly and accurately grasped. In addition, in the variable search mode, search and reproduction of the recording medium can be performed at various speeds from a lowest search speed to a highest search speed according to a user's selection. Accordingly, a user can grasp an outline of the recording medium rapidly and accurately, move to a desired area of the recording medium quickly, and use various functions of the recording medium efficiently.

## Description

The invention relates to a variable search method for a recording medium containing video data and a reproducing apparatus using the same.

In general, an optical disk is an example of a medium for storing or reproducing various data such as video data, including pictures, music, and moving pictures, etc. An optical disk includes a central hole, a fixed area, and an information area. In addition, the information area includes a lead-in area, a data area, and a lead-out area

An address of data on the optical disk is recorded in the lead-in area. In the lead-in area, a TOC (table of contents) for writing position, address, and time information for each track is provided. Accordingly, an optical disk reproducing apparatus can reproduce music or read data in the data area using the TOC. The data area stores actual data, such as music data in the case of a music CD, moving pictures in the case of a video CD, and installation files in the case of a program CD, etc. The lead-out area is an area containing an end part of the actual data and the edge of the optical disk.

When an optical disk is used as a re-recording optical disk, the optical disk may further include a PCA (power calibration area) and a PMA (program memory area) prior to the lead-in area of the information area. In more detail, the PCA is an area for determining laser intensity varied according to a media or operation contents, and the PMA is an area for storing each track name and start/end information temporarily before recording on the optical disk is finished.

In the conventional art, in order to grasp or determine the contents of an optical disk simply for a short period of time, a search is performed using an intro-scan function which searches the contents of the optical disk at high speed and displays the contents on a screen. However, in the conventional optical disk search method using the intro-scan function, data contents can not be immediately determined due to the rapid search operation. Because of this, a user does not grasp the contents of each chapter accurately but roughly guesses the contents of each chapter.

In order to solve the above-mentioned problem, the conventional method adjusts a reproducing time with a time set timer to perform the search more accurately; however, a time for performing total search of an optical disk may be increased using this method.

An object of the invention is to substantially solve at least one or more of the above problems and/or disadvantages in whole or in part and to provide at least the advantages described hereinafter.

In order to achieve at least the above objects in whole or in part and in according with the purposes of the invention, as embodied and broadly described, a variable search method for a recording medium containing video data is provided, which includes detecting and storing control information for each chapter of a title when a recording medium is inserted into a reproduction device, performing a variable search mode including performing viewable speed reproduction on a first portion of data content of the chapter, and performing a different speed reproduction on the remaining data content of the chapter on the basis of the stored data information.

To further achieve at least the above objects in whole or in part and in accordance with the purposes of the invention, as embodied and broadly described, a variable search method for a recording medium containing video data is provided, which includes detecting reproduction control information for each chapter recorded on a lead-in area of a recording medium and storing the reproduction control information, performing a variable search mode, when a search command is received, in which a first portion, including a first I-frame, of each chapter constructing a tide of the recording medium is reproduced for a specific time at a viewable speed on the basis of the reproduction control information and the remaining portions are reproduced at a different speed, and varying the different speed according to a user command.

To further achieve at least the above objects in whole or in part and in accordance with the purposes of the invention, as embodied and broadly described, an apparatus for reproducing video information on a recording medium is provided, which includes a pick up unit configured to detect a recording signal on a recording medium, a RF (radio frequency) processing unit configured to filter/shape the signal detected by the pick up unit, a driving unit configured to drive the pick up unit and a motor, a servo unit configured to control cooperation of the driving unit, a microcomputer configured to perform viewable speed reproduction on data of a predetermined portion of the recording medium by controlling the RF processing unit and the driving unit through the servo unit when viewable reproduction mode is selected, and when a variable search mode is selected, performing viewable speed reproduction on a predetermined portion, including a first I-frame, of each chapter and performing a different speed reproduction on the remaining portions of the chapter at variable speed, and a memory configured to store attribute information of a data block of each session of the optical disk.

To further achieve at least the above objects in whole or in part and in accordance with the purposes of the invention, as embodied and broadly described, a variable search method for a recording medium containing video data is provided, which includes detecting and storing control information for each title when a recording medium is inserted into a reproduction device, performing a variable search mode comprising performing viewable speed reproduction on a first portion of data content of the tide, and performing a different speed reproduction of the remaining data content of the title on the basis of the stored data information.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

The invention will be described in detail with reference to the following drawings in which like reference numerals refer to like elements wherein:

Figure 1 is a schematic block diagram of an optical disk reproducing apparatus configured to utilize a variable search method in accordance with an embodiment of the invention;

Figure 2 is a flow chart illustrating a reference speed search mode for an optical disk reproducing apparatus in accordance with an embodiment of the invention;

Figure 3 is a flow chart illustrating a lower speed search mode for an optical disk reproducing apparatus in accordance with an embodiment of the invention;

Figure 4 is a flow chart illustrating a higher speed search mode for an optical disk reproducing apparatus in accordance with an embodiment of the invention;

Figure 5 a schematic diagram illustrating a frame reproduction and search method in an optical disk variable search mode in accordance with an embodiment of the invention; and

Figure 6 is a schematic diagram illustrating a variable reproduction and search method according to an input while performing the operation in Figure 5.

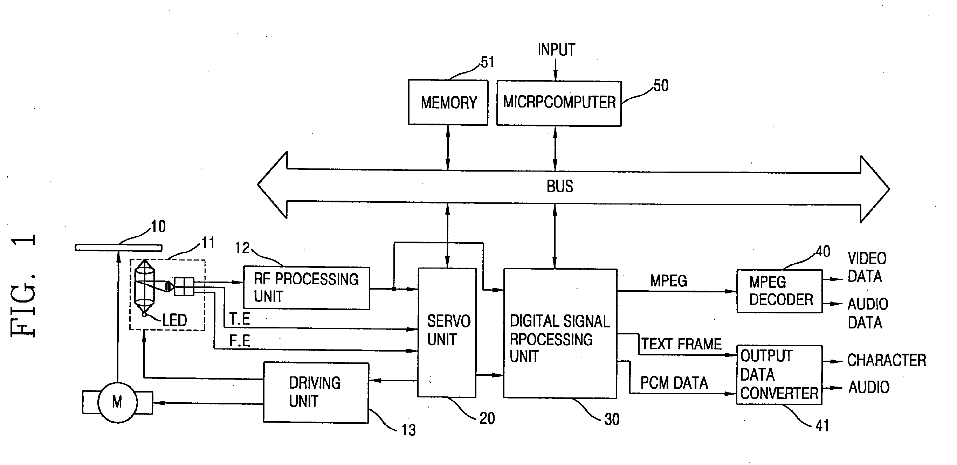

Figure 1 is a schematic block diagram of an optical disk reproducing apparatus using a variable search method in accordance with an embodiment of the invention. This invention is discussed in detail below using an optical disk as an example of a recording medium. However, the method and apparatus may be applied to other type recording medium and recording medium reproduction apparatus.

As depicted in Figure 1, an optical disk reproducing apparatus in accordance with an embodiment of the invention includes a pick up unit 11 for detecting a recording signal from an optical disk 10; a RF (radio frequency) processing unit 12 for filtering/shaping the signal detected by the pick up unit 11; a driving unit 13 for operating the pick up unit 11 and a motor M; a servo unit 20 for controlling the operation of the driving unit 13 and detecting synchronization with an output signal of the RF processing unit 12; a digital signal processing unit 30 for converting a signal read by the RF processing unit 12 into a digital signal using the detected synchronization, restoring it into original data and separating-outputting the data according to a data format; an MPEG decoder 40 for coding the restored compressed data into moving picture data and outputting it; an output data converter 41 for converting the restored PCM (pulse code modulation) or text frame into audio and characters and outputting it; a microcomputer 50 for controlling operation of the system so as to perform a normal speed reproduction search when a normal reproduction mode is selected and to perform a variable speed reproduction search when a variable search mode is selected; and a memory 51 for storing attribute information of a data block of each session of the optical disk 10.

The operation of the optical disk reproducing apparatus in accordance with an embodiment of the invention will be described below.

First, when the optical disk 10 is inserted into the optical disk reproducing apparatus, the microcomputer 50 controls the operation of the pick up unit 11 through the servo unit 20 and the driving unit 13 and moves the pick up unit 11 to a session on which a selected item exists.

Afterward, the microcomputer 50 detects reproduction control information (namely, TOC information) of a pertinent session recorded in a lead-in area of each session and stores the detected information in the memory 51. The reproduction control information may include start/end positions of a pertinent session, attribute information of the session (for example: VCD, DVD, MPEG file, CD-DA, PCM CD, etc.) and information about a start track number of the item of the session. This information is detected by the pick up unit 11.

Next, a high frequency signal detected by the pick up unit 11 is filtered/shaped in the RF processing unit 12, and the digital signal processing unit 30 detects a synchronous signal from the filtered signal and performs a normal reproduction mode for reproducing data on a pertinent track at normal speed.

The normal reproduction mode performing method will be described in more detail below.

First, the microcomputer 50 reads position information of a pertinent track of a session having a user-selected item from the memory 51, operates the driving unit 13 through the servo unit 20, and accordingly the pick up unit 11 moves to a pertinent track of the session. Next, the pick up unit 11 moves to the track on which the selected item of the pertinent session is located under the control of the driving unit 13 and reads data having an attribute, such as MPEG file, PCM CD and CD-DA. According to the attribute, the read data is restored by data synchronization detected by the servo unit 20 through the RF processing unit 12 and the digital signal processing unit 30, and is selectively output through the MPEG decoder 40 or the output data converter 41 according to the pertinent data attribute.

For example, if the described data attribute is MPEG, the MPEG format data is decoded-output by the MPEG decoder 40 as a moving picture, data such as PCM CD and CD-DA, etc. received from the digital signal processing unit 30 is output as an audio signal by the output data converter 41, and text frame having, for example, CD-ROM attribute is converted/extracted into an effective character and is outputted by the output data converter 41.

Finally, when there is a reproduction stop request from the user or the reproduction operation of the pertinent data block is completed, the reproduction operation on the selected item is finished.

In the meantime, the optical disk reproducing apparatus in accordance with an embodiment of the invention can perform a variable search mode in order to read the contents of the optical disk easily and accurately for a short period of time. That is, the microcomputer 50 displays a first frame of each chapter of a title for a specific period of time at a normal speed by controlling the operation of the RF processing unit 12 and the driving unit 13 through the servo unit 20 and displays the remaining frames of a pertinent chapter at a higher or lower speed until it reaches a first frame of a next chapter.

In addition, if several titles are recorded an the optical disk, the optical disk reproducing apparatus in accordance with an embodiment of the invention can still perform the variable search mode. In such a case, the microcomputer 50 displays a first frame of each chapter of a first title for a specific time at normal speed and then displays the remaining frames of a pertinent chapter at a higher or lower speed until it reaches a first frame of a first chapter of a second title.

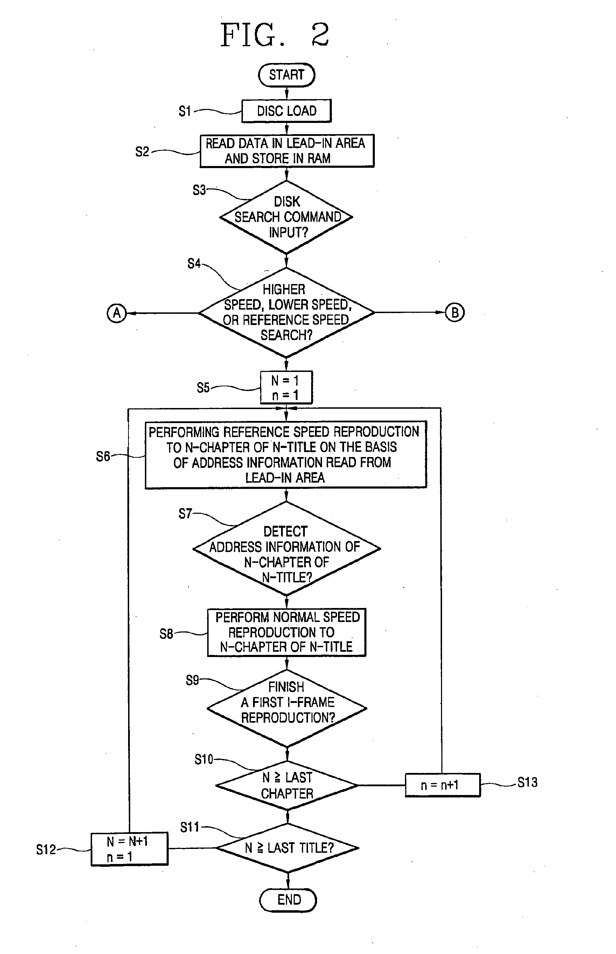

The variable search mode according to embodiments of the invention will be described in more detail below with reference to Figures 2 ~ 6.

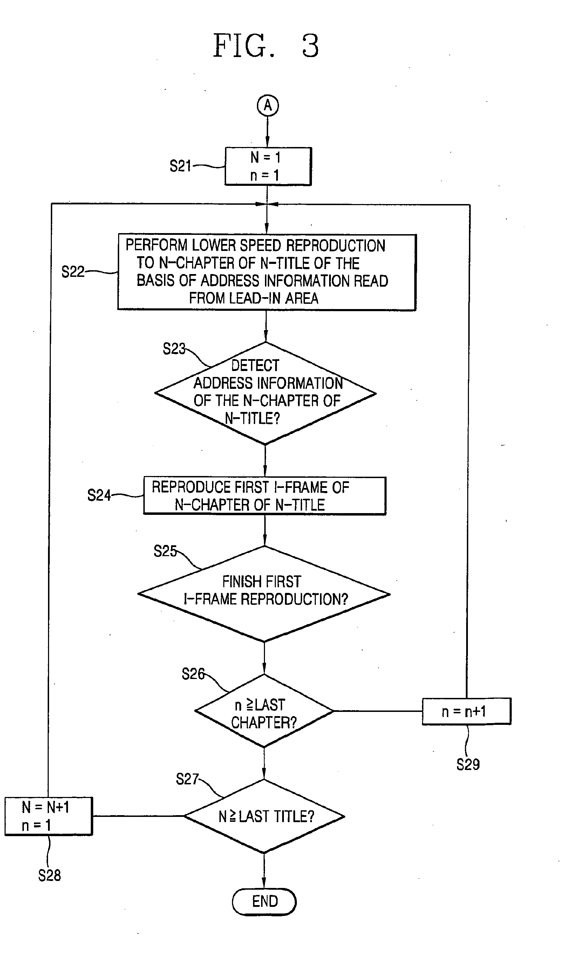

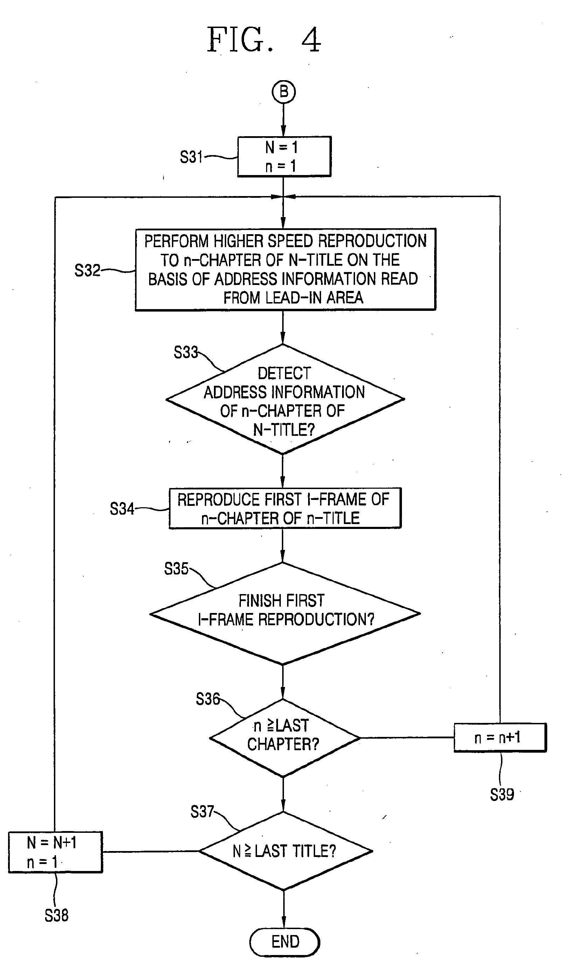

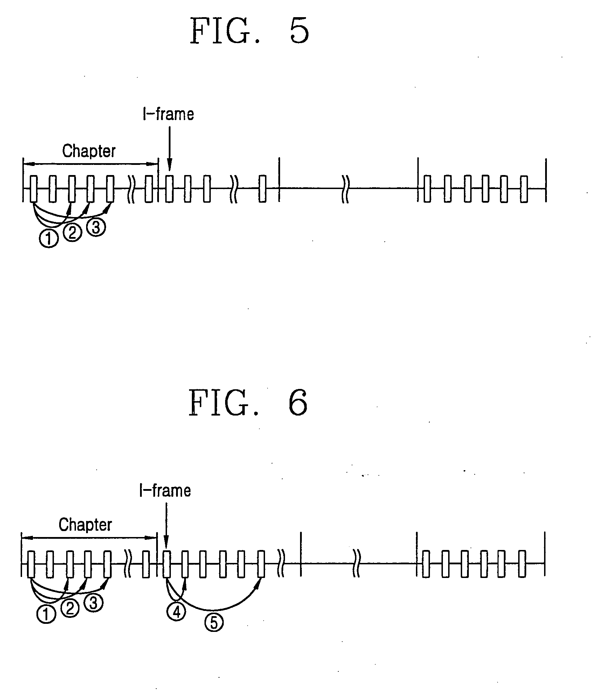

Figure 2 is a flow chart illustrating a reference speed search mode of an optical disk reproducing apparatus in accordance with an embodiment of the invention. Figure 3 is a flow chart illustrating a lower speed search mode for an optical disk reproducing apparatus in accordance with an embodiment of the invention. Figure 4 is a flow chart illustrating a higher speed search mode for an optical disk reproducing apparatus in accordance with an embodiment of the invention. Figure 5 is a schematic diagram illustrating a frame reproduction and search method in an optical disk variable search mode in accordance with an embodiment of the invention. Figure 6 is a schematic diagram illustrating a variable reproduction and search method according to an input while performing the operation in Figure 5.

Referring to Figure 2, first, the microcomputer 50 detects reproduction control information (namely, TOC information) of a pertinent session recorded on a lead-in area and stores it in the memory 51, as shown in steps S1 ~ S2. Next, when an optical disk search command is received from a user, the optical disk reproducing apparatus performs the variable search mode on each chapter of a title on the basis of the reproduction control information of a pertinent session stored in the memory 51, as shown in steps S3 ~ S4.

For example, as depicted in Figure 5, the variable search mode includes a reference speed search mode (2 in Figure 5) for performing reproduction by searching the optical disk 10 at ten times; a higher speed search mode (3 in Figure 5) for performing reproduction by searching the optical disk 10 at a speed higher than the reference speed; and a lower speed search mode (1 in Figure 5) for performing reproduction by searching the optical disk 10 at a speed lower than the reference speed. For example, normal speed for a reproduction apparatus, such as an optical disk reproduction device is generally one time speed; reference speed is ten times speed; higher speed is more than ten times speed; and lower speed is in a range between ten times speed and one time speed, or less than one time speed.

In the reference speed search mode, normal speed reproduction is performed on a first I-frame of each chapter of a title for several seconds, for example, 1 ~ 2 sec(s), on the basis of the reproduction control information read in the lead-in area of the optical disk, reference speed reproduction is performed until a first I-frame of a next chapter is detected, and it is repeatedly performed to a chapter of the last title, as shown at steps S5 ~ S13.

In addition, in the higher speed search mode, normal speed reproduction is performed on a first I-frame of each chapter constructing a title for several seconds, for example, 1 ~ 2 sec(s), on the basis of the reproduction control information read in the lead-in area of the optical disk, higher speed reproduction is performed until a first I-frame of a next chapter is detected, and it is repeatedly performed to a chapter of the last title, as shown at steps S21 ~ S29.

In addition, in the lower speed search mode, normal speed reproduction is performed on a first I-frame of each chapter of a title for several seconds, for example, 1 ~ 2 sec, on the basis of the reproduction control information read on the lead-in area of the optical disk, lower speed reproduction is performed until a first I-frame of a next chapter is detected, and it is repeatedly performed to a chapter of the last title, as shown at steps S31 ~ S39.

In the meantime, in the variable search mode of the optical disk reproducing apparatus in accordance with an embodiment of the invention, as depicted in Figure 6, the search speed can be varied again in response to an input signal from a user, for example, by a user using a channel up/down key.

For example, in the reference speed search mode, according to an embodiment in which a user may input a speed selection, for example, by pressing a channel up/down key input, the microcomputer 50 can perform search at the lower search speed of the variable search mode by controlling the operation of the RF processing unit 12 and the driving unit 13 through the servo unit 20 (4 in Figure 6). That is, the microcomputer 50 can perform search at the lowest search speed of the variable search mode in response to the channel up/down key input. Also, in the reference speed search mode, according to an embodiment in which a user may input a speed selection, for example, by pressing a the channel up/down key input, the microcomputer 50 can perform search at the higher search speed of the variable search mode by controlling the operation of the RF processing unit 12 and the driving unit 13 through the servo unit 20 (5 in Figure 6). That is, the microcomputer 50 can perform search at the highest search speed of the variable search mode in accordance with the channel up/down key input. In more detail, in an optical disk reproducing apparatus in accordance with an embodiment of the invention, search can be performed at various speeds from a lower search speed to a higher search speed according to a user's input, for example, through a key input.

As described-above, in the variable search mode in accordance with an embodiment of the invention, by performing normal speed reproduction on early data contents of each chapter of a title and performing variable speed reproduction on remaining data contents of the chapter, it is possible to grasp or determine the contents of each chapter recorded on the optical disk rapidly and accurately. In addition, in the operation of the variable search mode, it is possible to perform search and reproduction of the optical disk at various search speeds from a lower search speed to a higher search speed according to a user's input. Accordingly, a user can grasp an outline of the optical disk rapidly and accurately, move to a request area of the optical disk quickly, and use various functions of the optical disk efficiently.

The foregoing embodiments and advantages are merely exemplary and are not to be construed as limiting the invention. The present teaching can be readily applied to other types of apparatuses. The description of the invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. A variable search method for a recording medium containing video data, comprising:
detecting and storing control information for each chapter of a title when a recording medium is inserted into a reproduction device;
performing a variable search mode comprising:
performing viewable speed reproduction on a first portion of data content of the chapter; and
performing a different speed reproduction on the remaining data content of the chapter on the basis of the stored data information.

2. The method of claim 1, wherein the recording medium comprises an optical disk.

3. The method of claim 1 or 2, wherein performing viewable speed reproduction on a first portion of data content of the chapter comprises:
performing viewable speed reproduction on a pertinent track at normal speed on the basis of the stored data information; and
displaying the pertinent track as an image on a screen.

4. The method of claim 2 or 3, wherein data output on the screen has attributes comprising one of a MPEG file, PCM CD, and CD-DA.

5. The method of claim 3 or 4, wherein displaying the pertinent track as an image on a screen comprises displaying the pertinent track as an image on a screen for several seconds.

6. The method of claim 5, wherein displaying the pertinent track as an image on a screen comprises displaying the pertinent track as an image on a screen for 1 ~ 2 second(s).

7. The method of any of claims 1 to 6, wherein the stored data information comprises start and end positions of each chapter, attribute information for each chapter, and start track number of each item of each chapter stored on the recording medium.

8. The method of any of claims 1 to 7, wherein the variable search mode is repeatedly performed until the last chapter of a title is reproduced.

9. The method of any of claims 1 to 8, wherein the different speed reproduction comprises one of a reference speed search mode for reproducing the recording medium at a reference speed, a higher speed search mode for reproducing the recording medium at a speed higher than the reference speed, and a lower speed search mode for reproducing the recording medium at a speed lower than the reference speed.

10. The method of claim 9, wherein the different speed reproduction comprises lower speed reproduction.

11. The method of claim 1, wherein the viewable speed reproduction is performed on a predetermined portion, including a first 1-frame of each chapter, and thereafter the different speed reproduction is performed until a predetermined portion, including a first I-frame of a next chapter, is detected, and the above-mentioned processes are performed repeatedly in the variable search mode.

12. The method of claim 11, wherein the different speed reproduction comprises higher speed reproduction.

13. The method of any of claims 1 to 12, further comprising varying the reproduction speed in the variable search mode using a channel up/down key according to a user input.

14. The method of claim 13, wherein varying the reproduction speed in the variable search mode comprises varying the reproduction speed in the variable search mode using a channel up/down key according to a user input.

15. The method of claim 13, wherein the reproduction speed can be reduced in the lower speed search mode according to a channel up/down input, and the reproduction speed can be increased in the higher speed search mode according to a channel up/down input.

16. A variable search method for a recording medium containing video data, comprising:
detecting reproduction control information for each chapter recorded on the lead-in area of a recording medium and storing the reproduction control information;
performing a variable search mode, when a search command is received, in which a first portion, including a first I-frame, of each chapter of a title of the recording medium, is reproduced for a specific time at a viewable speed on the basis of the reproduction control information and the remaining portions are reproduced at a different speed; and
varying the different speed according to a user command.

17. The method of claim 16, wherein the viewable speed reproduction is performed on the predetermined portion, including a first I-frame of each chapter, on the basis of the reproduction control information read from a lead-in area of the recording medium, and then the different speed reproduction is performed until a predetermined portion, including a first I-frame of a next chapter, is detected, and thereafter the above-mentioned processes are performed repeatedly until a last chapter is reached.

18. The method of claim 17, wherein the different speed reproduction comprises higher speed reproduction.

19. The method of claim 17, wherein the different speed reproduction comprises lower speed reproduction.

20. Apparatus for reproducing video information on a recording medium, comprising:
a pick up unit configured to detect a recording signal on a recording medium;
a RF (radio frequency) processing unit configured to filter/shape the signal detected by the pick up unit;
a driving unit configured to drive the pick up unit and a motor;
a servo unit configured to control operation of the driving unit;
a microcomputer configured to perform viewable speed reproduction on data of a predetermined portion of the recording medium by controlling the RF processing unit and the driving unit through the servo unit when a viewable reproduction mode is selected, and when a variable search mode is selected, performing viewable speed reproduction on a predetermined portion, including a first I-frame of each chapter, and performing a different speed reproduction on the remaining portions of the chapter at variable speed; and
a memory configured to store attribute information of a data block of each session of the optical disk.

21. The apparatus of claim 20, further comprising:
a digital signal processing unit configured to convert a signal read by the RF processing unit into a digital signal, restore it into original data and output the data according to a data format;
an MPEG decoder configured to code the restored compressed data into moving picture data and output it; and
an output data converter configured to convert the restored PCM (pulse code modulation) or text frame into audio and characters and output it.

22. The apparatus of claim 20 or 21, wherein the different speed is a reference speed, a speed higher than the reference speed, or a speed lower than the reference speed.

23. The apparatus of claim 20, 21 or 22, further comprising a channel up/down input, wherein the microcomputer performs search at the lower search speed or the higher search speed by controlling the operation of the RF processing unit and the driving unit through the servo unit in the variable speed search operation in accordance with a user input via the channel up/down input.

24. A variable search method for a recording medium containing video data, comprising:
detecting and storing control information for each title when a recording medium is inserted into a reproduction device;
performing a variable search mode comprising:
performing viewable speed reproduction on a first portion of data content of the title; and
performing a different speed reproduction on the remaining data content of the title on the basis of the stored data information.

25. The method of claim 24, wherein the recording medium comprises an optical disk.

26. The method of claim 24 or 25, wherein performing viewable speed reproduction on a first portion of data content of the title comprises:
performing viewable speed reproduction on a pertinent track at normal speed on the basis of the stored data information; and
displaying the pertinent track as an image on a screen.

27. The method of claim 24, 25 or 26, wherein the different speed reproduction comprises one of a reference speed search mode for reproducing the recording medium at a reference speed, a higher speed search mode for reproducing the recording medium at a speed higher than the reference speed, and a lower speed search mode for reproducing the recording medium at a speed lower than the reference speed.

28. The method of any of claims 24 to 27, wherein the viewable speed reproduction is performed on a predetermined portion, including a first I-frame of each title, and thereafter the different speed reproduction is performed until a predetermined portion, including a first I-frame of a next title, is detected, and the above-mentioned processes are performed repeatedly in the variable search mode.
